(19) Europäisches Patentamt
European Patent Office
Office européen des brevets

(11) **EP 1 402 474 B1**

(12) **FASCICULE DE BREVET EUROPEEN**

(45) Date de publication et mention
de la délivrance du brevet:
**10.11.2004 Bulletin 2004/46**

(21) Numéro de dépôt: 02747500.3

(22) Date de dépôt: **04.06.2002**

(51) Int Cl.7: **G06T 3/40**, G06T 15/50

(86) Numéro de dépôt international:
**PCT/FR2002/001899**

(87) Numéro de publication internationale:
**WO 2003/003298 (09.01.2003 Gazette 2003/02)**

(54) **PROCEDE DE ZOOM**

ZOOM-VERFAHREN

ZOOMING METHOD

(84) Etats contractants désignés:
**DE ES FR GB**

(30) Priorité: **29.06.2001 FR 0108674**

(43) Date de publication de la demande:
**31.03.2004 Bulletin 2004/14**

(73) Titulaire: **Thales**
**75008 Paris (FR)**

(72) Inventeur: **VERBEQUE, Jean-René,**
**Thales Intellectual Property**
**F-94117 Arcueil Cedex (FR)**

(74) Mandataire: **Esselin, Sophie**
**THALES Intellectual Property,**
**31-33 avenue Aristide Briand**
**94117 Arcueil Cedex (FR)**

(56) Documents cités:
**EP-A- 0 434 037      EP-A- 0 774 748**

- **PATENT ABSTRACTS OF JAPAN vol. 016, no. 210 (E-1203), 19 mai 1992 (1992-05-19) & JP 04 035168 A (VICTOR CO OF JAPAN LTD), 5 février 1992 (1992-02-05)**
- **AMANATIDES J: "Realism in computer graphics: a survey" IEEE COMPUTER GRAPHICS AND APPLICATIONS, JAN. 1987, USA, vol. 7, no. 1, pages 44-56, XP001064715 ISSN: 0272-1716**

**Description**

L'invention concerne le domaine des procédés de zoom sur une partie d'une image qui est constituée de pixels et qui représente un terrain survolé par un aéronef. Le terrain survolé par l'aéronef est, soit le terrain effectivement survolé par l'aéronef lorsque l'image est affichée, soit le terrain qui est destiné à être survolé par l'aéronef, l'image étant alors affichée par anticipation. Le procédé de zoom est préférentiellement réalisé par certains blocs fonctionnels d'une fonction cartographique d'une carte accélérateur cartographique décrite en détail ultérieurement.

L'image est en général une image cartographique 2D5, c'est-à-dire représentant une vue de dessus du terrain qui est modulée, pixel par pixel, par une information d'ombrage représentative du relief du terrain. L'image peut être une image altimétrique ou une image planimétrique. Cette information d'ombrage détermine la luminosité de chaque pixel de l'image considérée. Dans le cas d'une image non zoomée, c'est-à-dire d'une image dont le facteur de zoom vaut un, cette information d'ombrage est déterminée par l'intermédiaire d'un calcul qui est réalisé, dans le repère d'un écran d'affichage de l'aéronef, pixel par pixel, à partir des altitudes de pixels voisins du pixel courant. Ces pixels voisins sont de préférence les pixels immédiatement voisins du pixel courant, c'est-à-dire les pixels les plus proches du pixel courant parmi les pixels voisins. L'information d'ombrage est calculée d'une part à partir d'un modèle d'éclairement de l'image utilisant une ou plusieurs sources de lumière, ponctuelle et/ou diffuse, et d'autre part à partir de la pente locale au niveau du pixel courant, c'est-à-dire en chacun des pixels de l'image, cette pente locale étant représentée par l'orientation d'une facette au niveau du pixel courant.

Selon l'art antérieur, ce calcul peut être mené selon plusieurs techniques différentes parmi lesquelles les plus connues sont la technique dite du « flat shading », la technique dite du « gouraud shading », et la technique dite de « Phong ». Il y a aussi des techniques connues dans l'art antérieur, voir p. ex. EP-A-0 434 037, selon lesquelles les caractéristiques optiques d'un pixel courant sont interpolées à partir des caractéristiques optiques des sommets des facettes polygonales en utilisant des techniques différentielles. Toutes ces techniques ont en commun d'utiliser des caractéristiques des pixels voisins, comme par exemple l'orientation des normales aux pixels voisins pour la technique dite de « gouraud shading », pour déterminer l'orientation de la facette qui représente la pente locale au niveau du pixel courant. Ces techniques donnent des résultats plus ou moins bons selon les techniques, au prix d'une complexité plus ou moins élevée dans la mise en oeuvre des dites techniques. Les résultats sont généralement corrects pour une image non zoomée. Par contre, pour une image zoomée, et surtout pour une image dont le facteur de zoom devient important, il apparaît une facettisation de l'image dite en « carrelage de salle de bain » (sauf pour la technique dite de « Phong », mais celle-ci est complexe et coûteuse en ressources) qui est gênante pour le pilote, spécialement en dynamique à cause du clignotement qui a lieu à la frontière entre les différents « carreaux de salle de bain » et sur lequel se focalise l'attention du pilote.

L'invention propose un procédé de zoom dans lequel, dans le cas de l'image zoomée avec un facteur de zoom donné, le facteur de zoom variant par exemple de un à huit, le facteur de zoom étant généralement continu et l'ensemble des valeurs du facteur de zoom étant séparé en différentes plages de zoom, le facteur de zoom unité appartenant à la plage unité pour laquelle l'image est non zoomée, l'information d'ombrage est déterminée par l'intermédiaire du même calcul que précédemment, mais cette fois ce calcul n'est pas réalisé à partir des altitudes des pixels voisins du pixel courant, mais à partir de pixels qui sont plus éloignés du pixel courant que les pixels voisins, le facteur d'éloignement qui est un entier naturel appartenant alors à la plage de zoom considérée de manière à être le plus proche possible du zoom considéré. Lorsque le facteur de zoom considéré est un entier, la valeur du facteur d'éloignement devient de préférence égal à la valeur du zoom considéré.

Selon l'invention, il est prévu un procédé de zoom sur une partie d'une image qui est constituée de pixels et qui représente un terrain survolé par un aéronef, l'image étant modulée, pixel par pixel, par une information d'ombrage représentative du relief du terrain, ladite information d'ombrage étant déterminée par l'intermédiaire d'un calcul réalisé, dans le repère d'un écran d'affichage de l'aéronef, pixel par pixel, à partir des altitudes de pixels voisins du pixel courant dans le cas de l'image non zoomée, caractérisé en ce que, dans le cas de l'image zoomée avec un facteur de zoom dont la valeur appartient à une plage donnée distincte de la plage à laquelle appartient le facteur de zoom unité lequel correspond à une image non zoomée, l'information d'ombrage est déterminée par l'intermédiaire dudit calcul réalisé à partir des altitudes de pixels qui sont plus éloignés du pixel courant que les pixels voisins, d'un facteur d'éloignement dont la valeur appartient à ladite plage donnée.

Le calcul considéré détermine l'information d'ombrage préférentiellement à partir de quatre pixels formant les sommets d'un carré dont le pixel courant est le centre, l'information d'ombrage étant alors obtenue à partir d'une part de la différence d'altitude entre le pixel situé en haut à gauche du pixel courant et le pixel situé en bas à droite du pixel courant et d'autre part de la différence d'altitude entre le pixel situé en haut à droite du pixel courant et le pixel situé en bas à gauche du pixel courant. Ces deux différences d'altitude représentent les pentes locales de la facette au niveau du pixel courant, selon deux directions orthogonales entre elles. Le nombre de pixels situés autour du pixel courant, retenu pour déterminer l'orientation de la facette au niveau du pixel courant, est de quatre, ce qui représente un bon compromis entre la simplicité du calcul réalisé et le réalisme de l'image obtenue au niveau du rendu du relief du terrain représenté.

Une fonction de saturation est préférentiellement appliquée sur le résultat de chacune desdites différences. Cela permet de limiter le nombre de bits nécessaires pour la représentation discrète des valeurs de ces différences. Ainsi, les étapes suivantes du calcul permettant d'obtenir, en chaque pixel, l'information d'ombrage qui est généralement un coefficient d'ombrage destiné à moduler la couleur du pixel courant, sont plus rapides et requièrent moins de ressources notamment en taille mémoire.

De manière préférentielle, l'information d'ombrage est directement obtenue par lecture d'une table de correspondance dite table d'ombrage qui comporte deux entrées. La table de correspondance est d'un fonctionnement simple et très rapide, donnant des résultats d'une précision satisfaisante. L'une des entrées reçoit la différence d'altitude entre le pixel situé en haut à gauche du pixel courant et le pixel situé en bas à droite du pixel courant tandis que l'autre entrée reçoit la différence d'altitude entre le pixel situé en haut à droite du pixel courant et le pixel situé en bas à gauche du pixel courant. Les valeurs de cette table, généralement chargée par logiciel, sont avantageusement recalculées d'une part à chaque changement d'échelle de l'image et d'autre part à chaque changement du zoom, ce qui permet d'adapter la table de correspondance à la métrique du terrain représenté laquelle métrique détermine notamment les pentes usuelles maximales susceptibles d'être rencontrées sur le terrain survolé par l'aéronef. Les valeurs de la table peuvent également être recalculées à d'autres moments, mais c'est moins nécessaire.

Le nombre de bits de codage des différences d'altitude est préférentiellement inférieur au nombre de bits de codage des altitudes, afin de limiter la taille de la table d'ombrage. La correspondance entre les bits de codage des différences d'altitude et les bits de codage des altitudes est de préférence variable de manière à s'adapter à la variation des différences d'altitude en fonction de la variation de l'éloignement des pixels entrant dans le calcul desdites différences d'altitude. Lorsque la variation de la métrique du terrain représenté entraîne une perte de détails concernant le relief du terrain, cette perte peut ainsi être compensée, au moins en partie, par une augmentation du contraste, c'est-à-dire par une mise en valeur des variations de relief du terrain. Par exemple, lorsque la valeur de l'échelle de l'image a tendance à diminuer, le poids du bit du codage des altitudes correspondant au bit le moins signifiant du codage des différences d'altitude a tendance à augmenter. Lorsque la valeur de l'échelle de l'image diminue substantiellement, c'est-à-dire passe en dessous d'un seuil prédéterminé, le poids du bit du codage des altitudes correspondant au bit le moins signifiant du codage des différences d'altitude augmente d'une unité. De façon similaire, lorsque la valeur du zoom augmente substantiellement, le poids du bit du codage des altitudes correspondant au bit le moins signifiant du codage des différences d'altitude diminue de préférence.

Afin de pouvoir réaliser les calculs de différence d'altitude, le procédé de zoom, en plus de l'altitude du pixel courant, doit pouvoir disposer des altitudes des pixels situés autour du pixel courant et éloignés du pixel courant d'un facteur d'éloignement lié à la valeur du zoom considérée. Pour cela, de préférence, le procédé de zoom utilise la succession bout à bout de quatre piles d'attente de longueurs déterminées de manière à ce que l'altitude du pixel situé en bas à droite du pixel courant soit disponible au niveau de l'entrée de la première pile d'attente, l'altitude du pixel situé en bas à gauche du pixel courant soit disponible entre la sortie de la première pile d'attente et l'entrée de la deuxième pile d'attente , l'altitude du pixel courant soit disponible entre la sortie de la deuxième pile d'attente et l'entrée de la troisième pile d'attente, l'altitude du pixel situé en haut à droite du pixel courant soit disponible entre la sortie de la troisième pile d'attente et l'entrée de la quatrième et dernière pile d'attente, l'altitude du pixel situé en haut à gauche du pixel courant soit disponible au niveau de la sortie de la quatrième et dernière pile d'attente.

L'invention sera mieux comprise et d'autres particularités et avantages apparaîtront à l'aide de la description ci-après et des dessins joints, donnés à titre d'exemples, où :

- la figure 1 représente schématiquement un premier exemple de système cartographique dans lequel s'intègre la carte accélérateur cartographique qui met en oeuvre le procédé selon l'invention ;
- la figure 2 représente schématiquement un deuxième exemple de système cartographique dans lequel s'intègre la carte accélérateur cartographique qui met en oeuvre le procédé selon l'invention ;
- la figure 3 représente schématiquement l'ensemble des blocs fonctionnels de la fonction cartographique de la carte accélérateur cartographique, ainsi que leurs relations entre eux, parmi lesquels blocs se trouvent les blocs fonctionnels mis en oeuvre par le procédé selon l'invention ;
- la figure 4 représente schématiquement les positions relatives et les altitudes d'un pixel courant et de pixels situés autour du pixel courant ;
- la figure 5 représente schématiquement un exemple d'affichage sur écran, de l'ensemble constitué par une image cartographique profile verticale et une image cartographique 2D5, par la fonction cartographique de la carte accélérateur cartographique mettant en oeuvre le procédé selon l'invention;
- la figure 6 représente schématiquement un exemple d'affichage sur écran, de l'ensemble constitué par une image cartographique profile horizontale et une image cartographique 2D5, par la fonction cartographique de la carte accélérateur cartographique mettant en oeuvre le procédé selon l'invention.

**EP 1 402 474 B1**

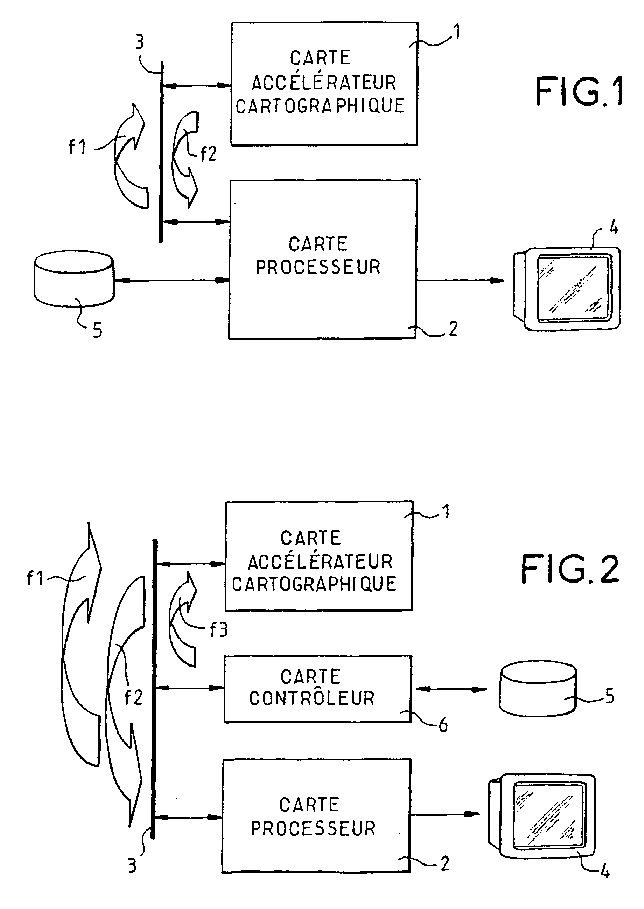

La figure 1 représente schématiquement un premier exemple de système cartographique dans lequel s'intègre la carte accélérateur cartographique qui met en oeuvre le procédé selon l'invention. Le système cartographique comporte une carte 1 accélérateur cartographique, une carte 2 processeur, un bus 3, un écran 4 d'affichage, une base 5 de données cartographiques. Le bus 3 est de préférence un bus PCI. La carte 2 processeur extrait des données cartographiques de la base 5 de données cartographiques pour les regrouper avec des paramètres du vol de l'aéronef et des paramètres de l'interface homme machine et les mettre sur le bus 3 dans un flot f1 de données. La carte 1 accélérateur cartographique lit les données du flot f1 qui circulent sur le bus 3. La carte 1 accélérateur cartographique utilise les données du flot f1 prises sur le bus 3 pour réaliser la synthèse d'une image cartographique. La carte 1 accélérateur cartographique envoie sur le bus 3 l'image cartographique dans un flot f2 de données. La carte 2 processeur lit sur le bus 3 l'image cartographique du flot f2 pour l'envoyer à l'écran 4 d'affichage. L'écran 4 d'affichage affiche l'image cartographique qui peut ainsi être visualisée par le pilote de l'aéronef par exemple.

La figure 2 représente schématiquement un deuxième exemple de système cartographique dans lequel s'intègre la carte accélérateur cartographique qui met en oeuvre le procédé selon l'invention. Le système cartographique comporte une carte 1 accélérateur cartographique, une carte 2 processeur, un bus 3, un écran 4 d'affichage, une base 5 de données cartographiques, une carte 6 contrôleur. Le bus 3 est de préférence un bus PCI. La carte 6 contrôleur extrait des données cartographiques de la base 5 de données cartographiques pour les mettre sur le bus 3 dans un flot f3 de données. La carte 2 processeur regroupe des paramètres du vol de l'aéronef et des paramètres de l'interface homme machine pour les mettre sur le bus 3 dans un flot f1 de données. La carte 1 accélérateur cartographique lit les données du flot f1 et les données du flot f3 qui circulent sur le bus 3. La carte 1 accélérateur cartographique utilise les données du flot f1 et les données du flot du f3 prises sur le bus 3 pour réaliser la synthèse d'une image cartographique. La carte 1 accélérateur cartographique envoie sur le bus 3 l'image cartographique dans un flot f2 de données. La carte 2 processeur lit sur le bus 3 l'image cartographique du flot f2 pour l'envoyer à l'écran 4 d'affichage. L'écran 4 d'affichage affiche l'image cartographique qui peut ainsi être visualisée par le pilote de l'aéronef par exemple.

La carte accélérateur cartographique réalise à la fois une fonction de gestion et une fonction cartographique.

La fonction de gestion comporte une tâche de réception des données cartographiques de la base 5 de données cartographiques sous forme compressée par le bus 3, une tâche de décompression desdites données cartographiques, une tâche de stockage desdites données cartographiques dans une mémoire de terrain, une tâche de calcul des paramètres du vol de l'aéronef et de gestion des paramètres en provenance de l'interface homme machine, une tâche de transmission desdits paramètres à la fonction cartographique, une tâche de fourniture des données stockées dans la mémoire de terrain à la fonction cartographique, une tâche de réception de l'image cartographique générée par la fonction cartographique, une tâche de stockage de l'image cartographique dans une mémoire cible, une tâche de transmission de ladite image cartographique par le bus à la carte processeur.

La fonction cartographique comporte une tâche de séparation des données cartographiques issues de la mémoire de terrain en données d'altitude, en éventuelles informations présence d'une zone de forêt pour les pixels concernés, en éventuelles informations de présence d'au moins une zone d'intervisibilité pour les pixels concernés, en éventuelles informations de planimétrie pour les pixels concernés, une tâche d'interpolation des données et informations au pixel courant produisant notamment une image planimétrique en couleur, une tâche de traitement des données d'altitude par un algorithme d'ombrage afin de générer en chaque pixel un coefficient d'ombrage correspondant à la luminance que présente l'image cartographique avec un modèle d'éclairement donné, une autre tâche de traitement, exécutée en parallèle de la précédente, des données d'altitude afin de générer une image coloration hypsométrique ou anticollision, une tâche de synthèse d'une image altimétrique en couleur par combinaison, en chaque pixel de l'image altimétrique, de la coloration hypsométrique ou anticollision avec d'une part l'information éventuelle de présence d'une zone de forêt et d'autre part l'information éventuelle de présence d'au moins une zone d'intervisibilité, une tâche de modulation, en chaque pixel, par le coefficient d'ombrage soit de l'image altimétrique soit de l'image planimétrique, une tâche de mélange des deux images altimétrique et planimétrique, l'une d'entre elles étant modulée par le coefficient d'ombrage et l'autre non, afin de générer une image cartographique. Avantageusement, la fonction cartographique permet la synthèse d'une image cartographique de profil représentant le terrain en coupe et pouvant être affichée soit horizontalement soit verticalement. La fonction cartographique est de préférence réalisée à l'aide d'un EPLD, de quatre piles d'attente de type FIFO (provenant de la terminologie anglo-saxonne « first in first out ») et d'une palette de couleurs.

La fonction cartographique comporte plusieurs types de mode de fonctionnement, parmi lesquels d'une part les types de mode hypsométrique et les types de mode anticollision, d'autre part les types de mode normal et les types de mode inversé. Un mode particulier s'obtient par croisement de types de mode compatibles entre eux. Les modes particuliers ainsi obtenus sont donc le mode anticollision normal, le mode hypsométrique normal, le mode anticollision inversé, le mode hypsométrique inversé.

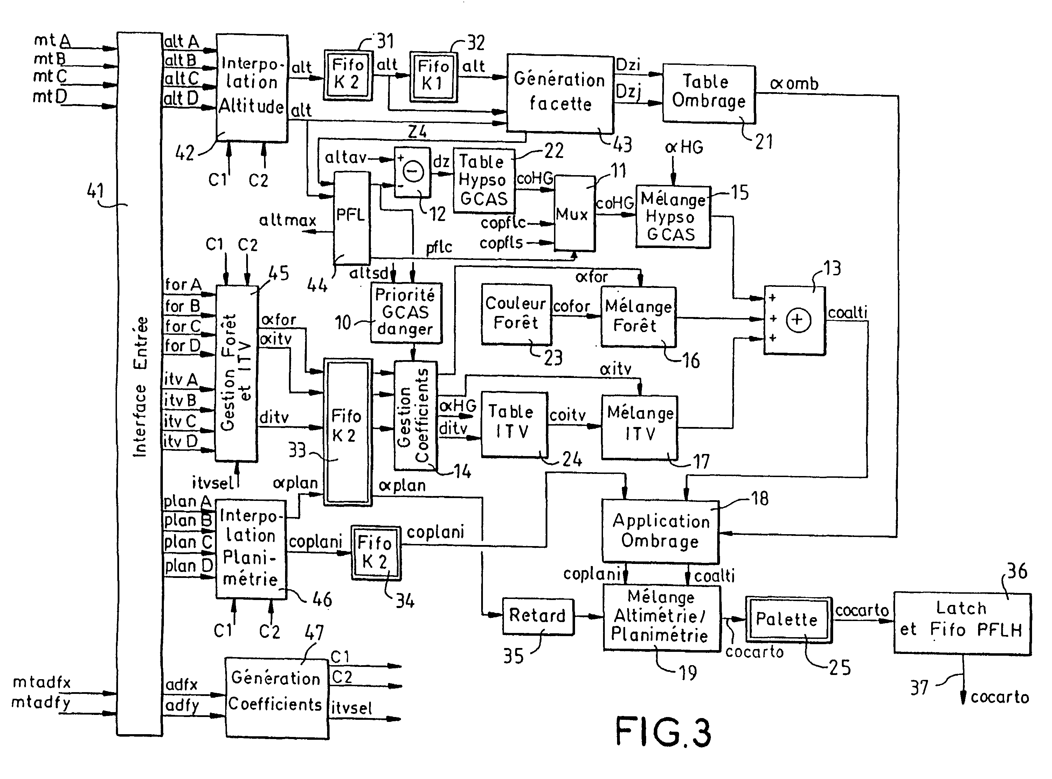

La figure 3 représente schématiquement l'ensemble des blocs fonctionnels de la fonction cartographique de la carte accélérateur cartographique, ainsi que leurs relations entre eux, parmi lesquels blocs se trouvent les blocs fonctionnels mis en oeuvre par le procédé selon l'invention. Les blocs fonctionnels réalisés par l'EPLD sont entourés d'un cadre simple tandis que les piles d'attente et la palette qui sont des composants structurellement distincts de l'EPLD sont entourés par un cadre double.

La tâche de séparation des données cartographiques issues de la mémoire de terrain en données d'altitude, en éventuelles informations de présence d'une zone de forêt pour les pixels concernés, en éventuelles informations de présence d'au moins une zone d'intervisibilité pour les pixels concernés, en éventuelles informations de planimétrie pour les pixels concernés, est réalisée par un bloc 41 interface d'entrée.

La tâche d'interpolation des données et informations au pixel courant P est réalisée par un bloc 42 d'interpolation d'altitude, un bloc 45 de gestion de la forêt et de l'intervisibilité (l'intervisibilité est représentée sur la figure 3 par le sigle ITV pour des raisons d'encombrement sur la figure 3) et un bloc 46 d'interpolation de planimétrie.

La tâche de traitement des données d'altitude par un algorithme d'ombrage afin de générer en chaque pixel un coefficient d'ombrage correspondant à la luminance de l'image cartographique avec un modèle d'éclairement donné, est réalisée par le bloc 43 de génération de facette et par la table 21 d'ombrage. Cet algorithme d'ombrage permet l'affichage simultané des macroreliefs et des microreliefs du terrain survolé par l'aéronef. Les macroreliefs correspondent à la disposition générale du relief du terrain survolé par l'aéronef. Les microreliefs correspondent à des différences de relief nettement plus faibles, par exemple une dizaine de mètres, mais suffisantes pour pouvoir abriter des menaces potentielles comme par exemple un système de missiles sol-air ou un hélicoptère ennemi. Cet affichage simultané des macroreliefs et des microreliefs est particulièrement intéressant dans le cas où l'aéronef dans lequel le système cartographique contenant la carte accélérateur cartographique est implémenté est un hélicoptère militaire.

La tâche de traitement des données d'altitude afin de générer une image coloration hypsométrique ou anticollision, est réalisée par un soustracteur 12, une table 22 hypsométrique ou anticollision, un multiplexeur 11 et un bloc 15 de mélange hypsométrique ou anticollision. La tâche de traitement des éventuelles informations de présence d'une zone de forêt, afin de générer une image forêt, est réalisée par un registre 23 de couleur de forêt et un bloc 16 de mélange forêt. La tâche de traitement des éventuelles informations de présence d'au moins une zone d'intervisibilité directe ou indirecte avec au moins une menace potentielle donnée ou non, une menace potentielle donnée signifiant une menace potentielle connue et renseignée dans la base de données, afin de générer une image d'intervisibilité, est réalisée par une table 24 d'intervisibilité et un bloc 17 de mélange intervisibilité.

La tâche de synthèse d'une image altimétrique en couleur par combinaison, en chaque pixel de l'image altimétrique, de la coloration hypsométrique ou anticollision avec d'une part l'information éventuelle de présence d'une zone de forêt et d'autre part l'information éventuelle de présence d'au moins une zone d'intervisibilité, c'est-à-dire la combinaison pixel par pixel de l'image coloration hypsométrique ou anticollision, de l'éventuelle image forêt et de l'éventuelle image intervisibilité, est réalisée par le bloc 14 gestion des coefficients, le bloc 10 priorité à l'anticollision danger et l'additionneur 13.

La tâche de modulation, en chaque pixel, par le coefficient d'ombrage soit de l'image altimétrique soit de l'image planimétrique, est réalisée par le bloc 18 d'application d'ombrage. La tâche de mélange des deux images altimétrique et planimétrique, l'une d'entre elles étant modulée par le coefficient d'ombrage et l'autre non, afin de générer une image cartographique, est réalisée par le bloc 19 de mélange altimétrie/planimétrie.

L'option consistant en la réalisation d'une synthèse d'une image cartographique de profil représentant le terrain en coupe et pouvant être affichée soit horizontalement soit verticalement, requiert l'utilisation du bloc 44 profile (PFL étant l'abréviation de « profile » sur la figure 3) et du bloc 36 « Latch & FIFO PFLH ».

Le rendu colorimétrique voulu de l'image cartographique est assurée par la palette 25 laquelle est de préférence une SRAM. Une partie des différentes fonctions de retard nécessaire à l'exécution des différentes tâches de la fonction cartographique est assurée par quatre piles d'attente 31 à 34 et par un bloc retard 35. Le calcul des coefficients d'interpolation utilisés par les blocs 42, 45 et 46, est réalisé par le bloc 47 de génération des coefficients d'interpolation.

Chacun des différents blocs fonctionnels de la fonction cartographique représenté par un cadre sur la figure 3 va maintenant être décrit en détail, dans son mode d'implémentation préférentiel. Chacun desdits blocs fonctionnels reçoit, pour chaque pixel de l'image cartographique à générer, ledit pixel étant appelé pixel courant, en provenance de l'extérieur de la fonction cartographique, d'un ou de plusieurs autres blocs fonctionnels de la fonction cartographique, un ensemble de paramètres d'entrée et émet, en direction de l'extérieur de la fonction cartographique, d'un ou de plusieurs autres blocs fonctionnels de la fonction cartographique, un ensemble de paramètres de sortie. Les paramètres de contrôle permettant un fonctionnement correct et adapté des différents blocs fonctionnels ne sont pas décrits dans la suite du texte, sauf cas particulier, pour des raisons de clarté, de simplicité, et de concision. Ces paramètres de contrôle sont pour la plupart classiques.

Le bloc 41 interface d'entrée reçoit en provenance de l'extérieur de la fonction cartographique, ici en provenance de la mémoire de terrain associée à la fonction gestion de la carte accélérateur cartographique, les paramètres d'entrée mtA, mtB, mtC, mtD, mtadfx et mtadfy. Les paramètres d'entrée mtA, mtB, mtC et mtD, contiennent différentes données et informations concernant respectivement les points A, B, C et D. Les paramètres d'entrée mtA, mtB, mtC et mtD, sont codés sur 16 bits et envoyés vers le bloc 41 interface d'entrée à une fréquence de 64 MHz. Les points A, B, C et D sont les points correspondant aux pixels de la mémoire terrain qui sont les plus proches du point P de la mémoire cible lequel point P correspond au pixel courant de l'image cartographique à générer. Le point P est issu des quatre points A, B, C et D par une transformation classique qui n'est pas l'objet de la présente demande de brevet et qui ne sera donc pas décrite avec plus de détail. Le quadruplet des points A, B, C et D est associé au point P et chaque pixel courant est donc associé à un quadruplet « courant » différent des autres. Les opérations réalisées sur les points A, B, C et D, comme par exemple les opérations d'interpolation, doivent être réalisées pour chaque pixel courant, c'est-à-dire pour chacun des pixels de l'image considérée. Les paramètres d'entrée mtadfx et mtadfy contiennent des parties fractionnaires des adresses d'accès à la mémoire de terrain qui représentent respectivement les coordonnées cartésiennes du point P dans la portion de plan définie par les points A, B, C et D.

A partir des paramètres d'entrée mtA, mtB, mtC et mtD, le bloc 41 interface d'entrée extrait les paramètres de sortie altA, altB, altC et altD qui sont les altitudes respectives des points A, B, C et D, et les envoie vers le bloc 42 d'interpolation d'altitude. Les paramètres de sortie altA, altB, altC et altD sont codés sur 10 bits et envoyés vers le bloc 42 d'interpolation d'altitude à une fréquence de 16MHz.

Egalement à partir des paramètres d'entrée mtA, mtB, mtC et mtD, le bloc 41 interface d'entrée extrait les paramètres de sortie forA, forB, forC et forD qui contiennent chacun éventuellement une information de présence d'une zone de forêt respectivement pour les points A, B, C et D, c'est-à-dire qui contiennent une information de présence d'une zone de forêt pour les points correspondant à des portions de terrain effectivement recouvertes de forêt, et les envoie vers le bloc 45 de gestion de forêt et d'intervisibilité. Les paramètres de sortie forA, forB, forC et forD sont codés sur 1 seul bit, l'une des valeurs du bit véhiculant une information de présence d'une zone de forêt et l'autre valeur du bit correspondant à une absence de zone de forêt, et envoyés vers le bloc 45 de gestion de forêt et d'intervisibilité à une fréquence de 16MHz. Dans la détermination ultérieure de priorités entre différentes informations, seule la valeur du bit véhiculant une information de présence d'une zone de forêt est prise en compte, la valeur du bit correspondant à une absence de zone de forêt étant considérée comme une absence d'information de présence d'une zone de forêt laquelle information est alors considérée comme étant inexistante, l'information de priorité immédiatement inférieure à l'information de présence d'une zone de forêt pouvant alors être prise en compte à condition bien sûr qu'il n'existe pas d'autre information de priorité supérieure à la priorité d'une information de présence d'une zone de forêt.

Encore à partir des paramètres d'entrée mtA, mtB, mtC et mtD, le bloc 41 interface d'entrée extrait les paramètres de sortie itvA, itvB, itvC et itvD qui contiennent chacun éventuellement une information de présence d'au moins une zone d'intervisibilité directe ou indirecte entre l'aéronef et une menace potentielle éventuellement donnée c'est-à-dire connue, respectivement pour les points A, B, C et D, c'est-à-dire qui contiennent une information de présence d'au moins une zone d'intervisibilité pour les points correspondant à des portions de terrain présentant effectivement une intervisibilité avec au moins une menace, et les envoie vers le bloc 45 de gestion de forêt et d'intervisibilité. Les paramètres de sortie itvA, itvB, itvC et itvD sont codés sur 5 bits et envoyés vers le bloc 45 de gestion de forêt et d'intervisibilité à une fréquence de 16MHz. De même que pour l'information de présence d'une zone de forêt, dans la détermination ultérieure de priorités entre différentes informations, seules les combinaisons de valeurs des bits véhiculant une information de présence d'au moins une zone d'intervisibilité sont prises en compte, les combinaisons de valeurs des bits correspondant à une absence de zone d'intervisibilité étant considérée comme une absence d'information de présence d'au moins une zone d'intervisibilité laquelle information est alors considérée comme étant inexistante, l'information de priorité immédiatement inférieure à l'information de présence d'au moins une zone d'intervisibilité pouvant alors être prise en compte à condition bien sûr qu'il n'existe pas d'autre information de priorité supérieure à la priorité d'une information de présence d'au moins une zone d'intervisibilité.

Toujours à partir des paramètres d'entrée mtA, mtB, mtC et mtD, le bloc 41 interface d'entrée extrait les paramètres de sortie planA, planB, planC et planD qui contiennent chacun éventuellement une information de planimétrie respectivement pour les points A, B, C et D, c'est-à-dire qui contiennent soit toujours une information de planimétrie dans le cas où la partie planimétrique de la base de données est du type carte papier numérisée (qu'il y ait effectivement ou non un élément planimétrique au pixel considéré) soit une information de planimétrie seulement s'il y a effectivement un élément de planimétrie au pixel considéré dans le cas où la partie planimétrique de la base de données est du type vectoriel, et les envoie vers le bloc 46 d'interpolation de planimétrie. Les paramètres de sortie planA, planB, planC et planD sont codés sur 16 bits et envoyés vers le bloc 46 d'interpolation de planimétrie à une fréquence de 16 MHz. Pour chacun des points A, B, C et D, l'ensemble des paramètres d'entrée est codé sur 16 bits et arrive au bloc 41 d'interface d'entrée à une fréquence de 64 MHz tandis que l'ensemble des paramètres de sortie est codé sur 32 bits et repart du bloc 41 d'interface d'entrée à une fréquence de 16 MHz.

A partir des paramètres d'entrée mtadfx et mtadfy qui sont codés sur 5bits et qui arrivent à la fréquence de 64 MHz au bloc 41 interface d'entrée, le bloc 41 interface d'entrée extrait les paramètres de sortie adfx et adfy qui sont codés sur 5 bits et qui sont envoyés vers le bloc 47 de génération des coefficients d'interpolation à la fréquence de 16 MHz. Les paramètres de sorties adfx et adfx contiennent des parties fractionnaires des adresses d'accès à la mémoire de terrain qui représentent respectivement les coordonnées cartésiennes du point P dans la portion de plan définie par les points A, B, C et D, puisque le point P situé dans la mémoire cible est obtenu par une transformation des points A, B, C et D, situés dans la mémoire de terrain.

Le bloc 47 de génération des coefficients d'interpolation reçoit en provenance du bloc 41 interface d'entrée les paramètres d'entrée adfx et adfy à la fréquence de 16 MHz. Le bloc 47 de génération des coefficients d'interpolation calcule à partir des paramètres d'entrée adfx et adfy, des paramètres de sortie C1 et C2 lesquels vont ensuite être utilisés par le bloc 42 d'interpolation d'altitude, par le bloc 46 d'interpolation de planimétrie et éventuellement par le bloc 45 de gestion de forêt et d'intervisibilité. Les paramètres de sortie C1 et C2 sont envoyés à la fréquence de 32 MHz et véhiculent en fait les valeurs de quatre coefficients d'interpolation bilinéaire, une paire de coefficients d'interpolation bilinéaire envoyée à chaque coup d'horloge permettant l'envoi du jeu des quatre coefficients vers les blocs 42, 45 et 46, à une fréquence moitié valant 16 MHz laquelle fréquence est aussi la fréquence de réception des autres paramètres d'entrée par lesdits blocs 42, 45 et 46. Les quatre coefficients d'interpolation bilinéaire sont (16-adfx) (16-adfy), (adfx) (16-adfy), (16-adfx) (adfy) et (adfx) (adfy), respectivement associés aux points A, B, C et D.

Le bloc 47 de génération des coefficients d'interpolation calcule également à partir des paramètres d'entrée adfx et adfy, un paramètre de sortie itvsel qui va ensuite être éventuellement utilisé par le bloc 45 de gestion de forêt et d'intervisibilité. Le paramètre itvsel indique sur 2 bits quel est, entre les points A, B, C et D, le plus proche voisin du point P représentant le pixel courant, lorsque la mémoire de terrain et la mémoire cible sont superposées.

Le bloc 42 d'interpolation d'altitude reçoit en provenance du bloc 41 interface d'entrée les paramètres d'entrée altA, altB, altC et altD, et reçoit en provenance du bloc 47 de génération des coefficients d'interpolation les paramètres d'entrée C1 et C2 contenant les coefficients d'interpolation bilinéaire. Le bloc 42 calcule à partir des différents paramètres d'entrée le paramètre de sortie alt qui est l'altitude du point P, c'est-à-dire l'altitude du pixel courant, à l'aide de la formule suivante :

$$alt = \frac{[(16\text{-}adfx)\cdot(16\text{-}adfy)\cdot altA + adfx\cdot(16\text{-}adfy)\cdot altB + (16\text{-}adfx)\cdot adfy\cdot altC + adfx\cdot adfy\cdot altD]}{256}$$

Le résultat du calcul précédent, l'altitude alt du point P, est codé sur 12 bits, à savoir 10 bits de partie entière et 2 bits de partie fractionnaire.

Pour rendre l'impression de relief à l'écran, sur une image dite 2D5, la méthode utilisée consiste à modifier la luminosité du pixel courant de l'image considérée en fonction de la pente locale du terrain au niveau dudit pixel courant. Pour cela, un modèle d'éclairage à une ou plusieurs sources de lumière est utilisé. Le modèle avantageusement retenu utilise deux sources de lumière, une source ponctuelle située en haut et à gauche de l'écran d'affichage ainsi qu'une source uniforme diffuse située au-dessus du plan de l'écran d'affichage. Ainsi l'éclairement reçu par le pixel courant reflète la pente locale du terrain au niveau du pixel courant. La génération d'une facette représentative de la pente locale au niveau du pixel courant est réalisée par le bloc 43 de génération de facette tandis que la correspondance entre la facette représentative de la pente locale du terrain au niveau du pixel courant et la luminosité dudit pixel courant est réalisée par la table 21 d'ombrage. La facette est générée à l'aide des altitudes de quatre pixels situés autour du pixel courant, la proximité du voisinage relatif entre d'une part ces quatre pixels et d'autre part le pixel courant étant variable et dépendant de la valeur d'un éventuel zoom sur une partie de l'image.

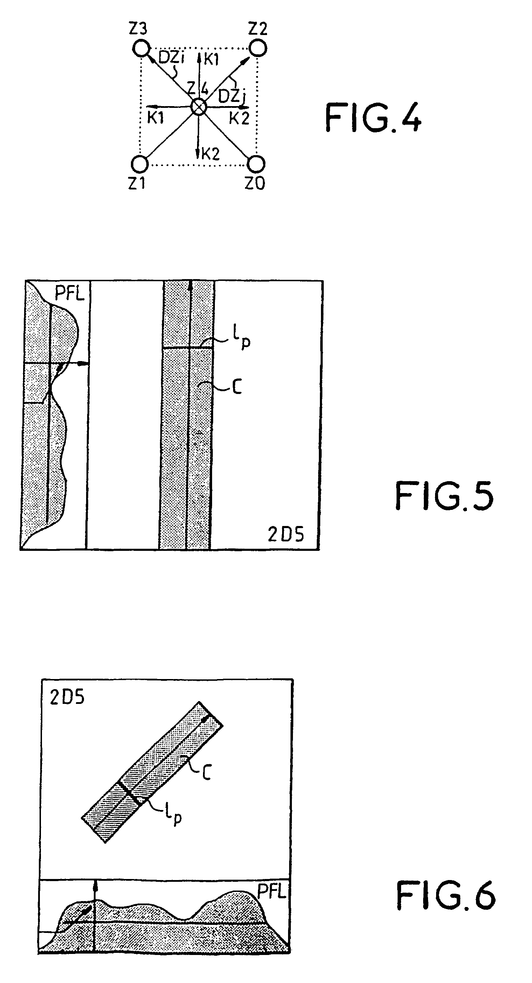

Le bloc 43 de génération de facette reçoit en provenance du bloc 42 d'interpolation d'altitude le paramètre d'entrée alt, en provenance du bloc 42 d'interpolation d'altitude par l'intermédiaire de la pile d'attente 31 le paramètre d'entrée alt retardé d'environ K2 lignes, en provenance du bloc 42 d'interpolation d'altitude par l'intermédiaire de la pile d'attente 31 et de la pile d'attente 32 le paramètre d'entrée alt retardé d'environ K2+K1 lignes. Le facteur K1+K2 est choisi proche de la valeur du zoom sur image éventuellement demandé par le pilote de l'aéronef ou par tout autre opérateur, la valeur de ce zoom pouvant varier par exemple environ de 1 (zoom unité correspondant en fait à une image non zoomée) à 8. Les valeurs de K1 et de K2 qui sont des valeurs entières sont choisies avantageusement de manière à être les plus proches possibles l'une de l'autre. En fonction de la valeur du zoom, K2 varie de 1 à 4 et K1 de 0 à 4. A l'aide de deux piles d'attente intégrées dans le bloc 43, lesquelles piles d'attente sont alors des registres à décalage compris dans le bloc 43 de génération de facette et ayant chacun une longueur de quelques points, ainsi qu'à l'aide des piles d'attente 31 et 32 ayant respectivement une longueur d'environ K2 lignes et d'environ K1 lignes, le bloc 43 de génération de facette peut disposer, à tout moment, des altitudes Z0 à Z4 de cinq points dont les positions relatives précises sont représentées schématiquement sur la figure 4. L'altitude Z4 est l'un des paramètres de sortie du bloc 43 de génération de facette.

Les points d'altitudes Z0 à Z3 forment les quatre sommets d'un carré. Les points d'altitudes Z0 et Z1 sont sur la même ligne et ont K1+K2 colonnes d'écart. Les points d'altitudes Z1 et Z3 sont sur la même colonne et ont K1+K2 lignes d'écart. Les points d'altitudes Z3 et Z2 sont sur la même ligne et ont K1+K2 colonnes d'écart. Les points d'altitudes Z2 et Z0 sont sur la même colonne et ont K1+K2 lignes d'écart. Le point d'altitude Z4 a, K1 lignes et K1 colonnes d'écart avec le point d'altitude Z3, K2 lignes et K2 colonnes d'écart avec le point d'altitude Z0, K1 lignes et K2 colonnes d'écart avec le point d'altitude Z2, K2 lignes et K1 colonnes d'écart avec le point d'altitude Z1. Le point d'altitude Z4 est donc situé sur les deux diagonales du carré, à savoir sur la diagonale reliant entre eux les points d'altitude Z3 et Z0 et sur la diagonale reliant entre eux les points d'altitude Z2 et Z1.

La facette au point d'altitude Z4 est déterminée par les pentes des deux diagonales du carré, et plus précisément par deux différences d'altitude, la différence d'altitude DZ30 entre les points d'altitudes Z3 et Z0 d'une part et la différence d'altitude DZ21 entre les points d'altitudes Z2 et Z1 d'autre part. Les égalités suivantes sont vérifiées :

$$DZ30 = Z3 - Z0 \text{ et } DZ21 = Z2 - Z1$$

En fait les valeurs DZ30 et DZ21 ainsi obtenues qui sont codées sur 12 bits, à savoir 10 bits de partie entière et 2 bits de partie fractionnaire, sont ensuite saturées sur 5 bits. La correspondance respective entre les poids des bits du résultat sur 12 bits et les poids des bits de la valeur saturée sur 5 bits est variable et dépend de la valeur de l'échelle de l'image ainsi que de la valeur du zoom éventuellement appliqué sur une partie de l'image. Cette saturation limite la pente maximum représentable et empêche donc de représenter précisément les falaises, mais dans la pratique ceci n'est pas gênant pour le pilote qui d'une part rencontre peu de véritables falaises et d'autre part s'en fait une idée tout de même assez proche par l'intermédiaire de la valeur maximale de saturation correspondant à une pente d'environ soixante degrés. Les valeurs DZ30 et DZ21 sont codées sur 5 bits et sont donc comprises entre -16 et +15. Afin de n'avoir que des valeurs positives, la valeur 16 est alors ajoutée respectivement à DZ30 et à DZ21 pour donner respectivement les valeurs DZi et DZj. Les égalités suivantes sont vérifiées :

$$DZi = 16 + Z3 - Z0 \text{ et } DZj = 16 + Z2 - Z1$$

Les valeurs DZi et DZj alors obtenues qui sont des paramètres de sortie du bloc 43 de génération de facette et qui sont représentatives de la facette au niveau du pixel courant, et par conséquent de la pente locale au niveau dudit pixel courant, constituent les deux paramètres d'entrée de la table 21 d'ombrage dont le paramètre de sortie est le coefficient d'ombrage $\alpha$omb qui est représentatif de la luminosité du pixel courant considéré.

La table 21 d'ombrage est une table de correspondance (« look up table » en terminologie anglo-saxonne), dont le couple de valeurs DZi et DZj (qui sont saturées) constitue une adresse dont le contenu constitue alors le coefficient d'ombrage $\alpha$omb cherché. La table 21 d'ombrage comprend 1024 adresses correspondant aux 32X32 valeurs possibles du couple de valeurs DZi et DZj. Les adresses sont codées de manière à ce que l'égalité suivante soit vérifiée :

$$adresse(pixel \cdot courant) = 32DZj + DZi$$

Le coefficient d'ombrage $\alpha$omb obtenu à l'aide de la table 21 d'ombrage est codé sur 7 bits, sa valeur varie donc de 0 correspondant à une luminosité du pixel courant égale à 0% (point pas du tout éclairé, sa couleur vire donc au noir) à 64 correspondant à une luminosité du pixel courant égale à 100% (point complètement éclairé, sa luminosité n'est pas modifiée et sa couleur d'origine n'est pas assombrie). La table 21 d'ombrage est programmée par logiciel. L'ensemble des valeurs de la table 21 d'ombrage est recalculé et reprogrammé à chaque changement d'échelle de l'image cartographique lequel changement entraîne une modification des valeurs chargées dans la mémoire de terrain ainsi qu'à chaque changement de la valeur du zoom lequel changement n'entraîne pas de modification des valeurs chargées dans la mémoire de terrain. Une simple modification du cap de l'aéronef ne modifie pas le contenu de la table 21 d'ombrage.

Le bloc 45 de gestion de la forêt et de l'intervisibilité reçoit, en provenance du bloc 41 interface d'entrée les paramètres d'entrée qui sont forA, forB, forC et forD, codés chacun sur 1 bit, d'une part, et itvA, itvB, itvC et itvD, codés sur 5 bits, d'autre part, en provenance du bloc 47 de génération des coefficients les paramètres d'entrée C1 et C2 et éventuellement le paramètre d'entrée itvsel. Les paramètres de sortie du bloc 45 de gestion de forêt et d'intervisibilité sont, pour chaque pixel courant, le coefficient forêt $\alpha$for et le coefficient intervisibilité $\alpha$itv, tous deux codés sur 5 bits, ainsi qu'une donnée d'intervisibilité ditv au niveau dudit pixel courant.

Les paramètres d'entrée itvA, itvB, itvC et itvD, contiennent chacun une éventuelle information de présence d'au moins une zone d'intervisibilité. Plus précisément, les paramètres d'entrée itvA, itvB, itvC et itvD, contiennent respectivement les paramètres pitvA, pitvB, pitvC et pitvD, codés sur un bit, leur valeur à un signifiant la présence d'au moins une zone d'intervisibilité au pixel considéré, A, B, C ou D, et leur valeur à zéro signifiant l'absence de toute zone d'intervisibilité au pixel considéré, A, B, C ou D. Au niveau global d'une image complète, l'intervisibilité peut être validée ou non validée. Si l'intervisibilité est non validée, alors le coefficient intervisibilité $\alpha$itv vaut uniformément zéro pour toute l'image considérée. Si l'intervisibilité est validée, alors le coefficient intervisibilité $\alpha$itv est donné, au niveau de chaque pixel courant, par la formule suivante :

$$\alpha itv = \frac{[(16\text{-}adfx)\cdot(16\text{-}adfy)\cdot pitvA+adfx\cdot(16\text{-}adfy)\cdot pitvB+(16\text{-}adfx)\cdot adfy\cdot pitvC+adfx\cdot adfy\cdot pitvD]}{256}$$

Les contours d'une zone d'intervisibilité sont les limites entre une zone de présence d'intervisibilité correspondant par exemple à une menace donnée et une zone d'absence de ladite intervisibilité. Les pixels appartenant aux dits contours risquent d'avoir des valeurs pitvA, pitvB, pitvC et pitvD qui ne sont pas toutes identiques, ce qui donne alors un coefficient intervisibilité $\alpha itv$ strictement compris entre zéro et un. Ce risque devient certain pour les pixels appartenant aux contours de l'ensemble des zones d'intervisibilité, car ces pixels appartiennent aux contours d'au moins une zone d'intervisibilité mais n'appartiennent à l'intérieur d'aucune zone d'intervisibilité.

Les paramètres d'entrée itvA, itvB, itvC et itvD, contiennent chacun une donnée d'intervisibilité, respectivement ditvA, ditvB, ditvC et ditvD, qui peut se présenter soit sous la forme d'une donnée continue sur 4 bits, soit sous la forme de quatre données binaires relatives respectivement à quatre altitudes potentielles de l'aéronef différentes entre elles. Dans le cas d'une donnée continue, le paramètre de sortie ditv est donné, au niveau de chaque pixel courant, par la formule suivante :

$$ditv = \frac{[(16\text{-}adfx)\cdot(16\text{-}adfy)\cdot ditvA+adfx\cdot(16\text{-}adfy)\cdot ditvB+(16\text{-}adfx)\cdot adfy\cdot ditvC+adfx\cdot adfy\cdot ditvD]}{256}$$

Dans le cas de quatre données binaires, grâce au coefficient itvsel codé sur 2 bits, le plus proche voisin, parmi les points A, B, C et D, du point P correspondant au pixel courant est déterminé et la donnée d'intervisibilité du pixel courant est une recopie de la donnée d'intervisibilité du plus proche voisin ; par exemple, si A est le plus proche voisin de P, alors ditv=ditvA.

Les paramètres d'entrée forA, forB, forC et forD, contiennent chacun une éventuelle information de présence d'une zone de forêt. Les paramètres d'entrée forA, forB, forC et forD, sont codés sur un bit, leur valeur à un signifiant la présence d'une zone de forêt au pixel considéré, A, B, C ou D, et leur valeur à zéro signifiant l'absence de zone de forêt au pixel considéré, A, B, C ou D. Au niveau global d'une image complète, la forêt peut être validée ou non validée. Si la forêt est non validée, alors le coefficient forêt $\alpha for$ vaut uniformément zéro pour toute l'image considérée. Dans le type de mode anticollision, la forêt est toujours non validée. Si la forêt est validée, alors le coefficient forêt $\alpha for$ est donné, au niveau de chaque pixel courant, par la formule suivante :

$$\alpha for = \frac{[(16\text{-}adfx)\cdot(16\text{-}adfy)\cdot forA+adfx\cdot(16\text{-}adfy)\cdot forB+(16\text{-}adfx)\cdot adfy\cdot forC+adfx\cdot adfy\cdot forD]}{256}\text{-}\alpha itv$$

le coefficient forêt $\alpha for$ devant être compris entre zéro et un, il est ensuite forcé à zéro dans le cas où la formule précédente donne un résultat négatif.

Les contours d'une zone de forêt sont les limites entre une zone de présence de forêt et une zone d'absence de forêt. Les pixels appartenant aux dits contours ont des risquent d'avoir des valeurs forA, forB, forC et forD, qui ne sont pas toutes identiques, ce qui donne alors un coefficient forêt $\alpha for$ strictement compris entre zéro et un.

L'ensemble des paramètres de sortie du bloc 45 de gestion de forêt et d'intervisibilité est retardé d'environ K2 lignes par l'intermédiaire d'une pile d'attente 33 afin que les paramètres d'entrée de l'additionneur 13 arrivent en phase les uns avec les autres.

Le bloc 44 profile et le multiplexeur 11 n'interviennent que dans le cas d'une image cartographique profile, ils seront par conséquent décrits ultérieurement dans ce contexte. Dans le cas d'une image cartographique 2D5, représentant une vue de dessus du terrain à laquelle a été ajoutée une information de relief du terrain, ladite information de relief du terrain étant représentée au travers du coefficient d'ombrage $\alpha omb$, le bloc 44 profile se contente, dans un mode de fonctionnement dégradé, de transmettre l'altitude Z4 à l'entrée du soustracteur 12 et le multiplexeur 11 se contente, dans un mode de fonctionnement dégradé, de faire passer l'image coloration hypsométrique ou anticollision coHG de la sortie de la table 22 hypsométrique ou anticollision (notée table Hypso GCAS sur la figure 3) à l'entrée du bloc 15 mélange hypsométrique ou anticollision.

Le bloc 10 priorité anticollision danger est actif uniquement dans le type de mode anticollision, il est par contre inhibé et inactif dans le type de mode hypsométrique. L'un des paramètres de sortie du bloc 44 profile constitue l'un des paramètres d'entrée du bloc 10 priorité anticollision danger. Dans le cas d'une image cartographique 2D5, ce paramètre est l'altitude Z4. Une altitude seuil danger altsd, dépendant de l'altitude de l'aéronef, constitue l'autre paramètre d'entrée du bloc 10 priorité anticollision danger. L'altitude seuil danger altsd est déterminée de manière à ce que, lorsque l'altitude Z4 est supérieure à l'altitude seuil danger altsd, il existe soit un danger de collision entre le terrain et l'aéronef dans certains cas soit un risque de danger de collision entre le terrain et l'aéronef dans d'autres cas qui mérite d'être signalé au pilote en priorité par rapport à tout autre type d'information. Par exemple dans un type de mode anticollision genre GCAS (de la terminologie anglo-saxonne « ground collision avoidance system »), à trois couleurs rouge, ambre et verte, le danger de collision correspond à la couleur rouge et le risque de danger de collision correspond à la couleur orange. L'information de danger de collision correspond à un risque certain de collision tandis que le risque de danger de collision est une marge de sécurité dans laquelle le risque est indéterminé car fonction des incertitudes globales du système. Généralement l'altitude seuil danger altsd est choisie égale à l'altitude altav de l'aéronef. Dans le cas où l'altitude $Z4$ est supérieure à l'altitude seuil danger altsd, le paramètre de sortie du bloc 10 priorité anticollision danger a pour effet de modifier le fonctionnement normal du bloc 14 de gestion des coefficients et d'imposer à ce bloc 14 de gestion des coefficients de forcer les coefficients forêt $\alpha$for et intervisibilité $\alpha$itv à zéro d'une part et de forcer le coefficient hypsométrique ou anticollision $\alpha$HG à un ; dans le cas contraire, le bloc 10 priorité anticollision danger ne modifie pas le fonctionnement normal du bloc 14 de gestion des coefficients. Dans tous les cas, la donnée d'intervisibilité ditv au niveau du pixel courant, qui est un paramètre d'entrée, est transmise sans modification comme paramètre de sortie. Le fonctionnement normal du bloc 14 de gestion des coefficients consiste à transmettre, sans modification, en paramètres de sortie les coefficients forêt $\alpha$for et intervisibilité $\alpha$itv reçus en paramètres d'entrée, et de calculer le coefficient hypsométrique ou anticollision $\alpha$HG en fonction des coefficients forêt $\alpha$for et intervisibilité $\alpha$itv par la formule suivante : $\alpha HG = 1-\alpha for-\alpha itv$. La façon de déterminer les différents coefficients $\alpha$HG, $\alpha$for et $\alpha$itv, ainsi que la présence du bloc 10, définissent un ordre de priorité des différentes informations participant à la constitution de l'image altimétrique.

Pour l'élaboration d'une image coloration hypsométrique ou anticollision, deux types de mode de fonctionnement sont possibles, le type de mode hypsométrique générant une image coloration hypsométrique et le type de mode anticollision générant une image coloration anticollision, par exemple de type GCAS.

Dans le type de mode hypsométrique, la couleur de l'image coloration hypsométrique est une fonction de l'altitude absolue du terrain et va du vert à l'ocre rouge comme pour les cartes papier usuelles de type atlas. La table 22 hypsométrique ou anticollision qui est une table de correspondance similaire à la table 21 d'ombrage est chargée avec des valeurs correspondant à la coloration hypsométrique. Le soustracteur 12 n'intervient alors pas, il se contente de faire suivre l'altitude $Z4$ du pixel courant à l'entrée de la table 22 hypsométrique ou anticollision laquelle table 22 émet en sortie une coloration hypsométrique coHG pour le pixel courant, l'ensemble des colorations hypsométriques coHG pour tous les pixels courants constituant l'image coloration hypsométrique. Le bloc 15 de mélange hypsométrique ou anticollision reçoit comme paramètres d'entrée la coloration hypsométrique coHG du pixel courant en provenance du multiplexeur 11 et le coefficient hypsométrique ou anticollision $\alpha$HG en provenance du bloc 14 de gestion des coefficients. Le bloc 15 de mélange hypsométrique ou anticollision réalise la modulation, pixel par pixel, de la coloration hypsométrique coHG du pixel courant par le coefficient hypsométrique ou anticollision $\alpha$HG du pixel courant, ladite modulation consistant en un produit entre la coloration hypsométrique coHG et le coefficient hypsométrique ou anticollision $\alpha$HG.

Dans le type de mode anticollision, la couleur de l'image coloration anticollision est une fonction de l'altitude relative du terrain, c'est-à-dire de la différence d'altitude entre l'aéronef et le terrain, et se traduit par exemple par la coloration GCAS (de « Ground Collision Avoidance System » en terminologie anglo-saxonne) usuelle qui comporte les couleurs rouge, ambre et verte. La couleur verte, qui est une couleur de sécurité, est associée aux portions de terrain dont l'altitude est sans aucun doute inférieure à celle de l'aéronef. La couleur rouge, qui est une couleur de danger, est associée aux portions de terrain dont l'altitude est sans aucun doute supérieure à celle de l'aéronef, ce qui entraînerait un crash en cas de survol par ledit aéronef desdites portions de terrain. La couleur ambre est une autre couleur qui, compte tenu des incertitudes inhérentes à l'ensemble du système cartographique, est associée aux portions de terrain pour lesquelles un crash en cas de survol est possible mais non certain, c'est en fait une sorte de marge de sécurité. La table 22 hypsométrique ou anticollision qui est une table de correspondance similaire à la table 21 d'ombrage est chargée avec des valeurs correspondant à la coloration anticollision. Le soustracteur 12 intervient et réalise la soustraction entre l'altitude altav de l'aéronef et l'altitude $Z4$ du pixel courant, le résultat dz de la soustraction étant émis en sortie pour alimenter l'entrée de la table 22 hypsométrique ou anticollision laquelle table 22 émet en sortie une coloration anticollision coHG pour le pixel courant, laquelle coloration coHG est par exemple l'une des couleurs de la coloration GCAS usuelle, l'ensemble des colorations anticollision pour tous les pixels courants constituant l'image coloration anticollision. Le bloc 15 de mélange hypsométrique ou anticollision reçoit comme paramètres d'entrée la coloration anticollision coHG du pixel courant en provenance du multiplexeur 11 et le coefficient hypsométrique ou anticollision $\alpha$HG du pixel courant en provenance du bloc 14 de gestion des coefficients. Le bloc 15 de mélange hypsométrique ou anticollision réalise la modulation, pixel par pixel, de la coloration anticollision coHG du pixel courant par le coefficient hypsométrique ou anticollision $\alpha$HG du pixel courant, ladite modulation consistant en un produit entre la coloration anticollision coHG et le coefficient hypsométrique ou anticollision $\alpha$HG.

Une couleur forêt cofor est contenue dans un registre 23 couleur de forêt. Le bloc 16 de mélange forêt réalise la modulation, pixel par pixel, de la couleur forêt cofor (commune à tous les pixels) par le coefficient forêt $\alpha$for du pixel courant, ladite modulation consistant en un produit entre la couleur forêt cofor et le coefficient forêt $\alpha$for. La formule de calcul du coefficient forêt $\alpha$for permet de réaliser un lissage du contour des zones de forêt, lequel lissage supprime les effets « marches d'escalier » qui sont particulièrement gênants essentiellement en dynamique. L'ordre des priorités entre les différentes informations participant à la constitution de l'image altimétrique n'est par conséquent plus strictement vérifié pour les pixels appartenant aux contours d'une zone de présence de forêt.

La couleur forêt n'intervient que dans le type de mode hypsométrique, car en type de mode anticollision, la forêt est non validée et par conséquent le coefficient forêt $\alpha$for est forcé à zéro pour toute l'image considérée.

La table 24 d'intervisibilité qui est une table de correspondance similaire à la table 21 d'ombrage est chargée avec des valeurs correspondant au type de donnée d'intervisibilité ditv disponible sur son entrée qui peut être soit une donnée continue sur 4 bits soit un quadruplet de données binaires. Dans le cas d'une donnée continue sur quatre bits, la valeur de ladite donnée peut aller d'une valeur extrême danger liée à une présence certaine d'au moins une zone d'intervisibilité à une valeur extrême sécurité liée à la certitude d'absence de zone d'intervisibilité dans la zone de portée de menace considérée dans le cas de l'intervisibilité indirecte ou dans le secteur de visibilité de l'aéronef dans le cas de l'intervisibilité directe ; les couleurs respectivement associées aux dites valeurs vont de la couleur unie danger à la couleur unie sécurité en passant par tout un dégradé de couleurs intermédiaires unies, chaque dégradé étant plus ou moins proche d'une des couleurs extrêmes selon que la probabilité de présence d'au moins une zone d'intervisibilité est plus ou moins élevée. Dans le cas d'un quadruplet de données binaires, le résultat fourni par la table 24 d'intervisibilité ne dépend que de la donnée binaire correspondant à l'altitude effective de l'aéronef ou le cas échéant que des deux données binaires encadrant l'altitude effective de l'aéronef. Lorsque ledit résultat ne dépend que des deux données binaires encadrant l'altitude effective de l'aéronef, et que les deux données sont différentes, c'est la donnée de présence d'au moins une zone d'intervisibilité correspondant à la couleur unie danger qui est prioritaire et qui est par conséquent seule retenue. La table 24 d'intervisibilité est programmée par logiciel comme les autres tables de correspondance. La donnée d'intervisibilité ditv du pixel courant arrive à l'entrée de la table 24 d'intervisibilité laquelle table 24 émet en sortie une coloration d'intervisibilité coitv pour le pixel courant, l'ensemble des colorations d'intervisibilité pour tous les pixels constituant l'image d'intervisibilité. La coloration d'intervisibilité est soit une couleur unie danger, par exemple le rouge, pour les zones de présence d'au moins une zone d'intervisibilité, soit une couleur unie sécurité, par exemple le vert, pour une zone de portée d'au moins une menace n'incluant aucune zone d'intervisibilité dans certains cas ou pour le secteur de visibilité de l'aéronef dans d'autres cas, les parties de l'image d'intervisibilité situées à l'extérieur de toutes les zones précédentes sont considérées comme vides, aucune coloration ne leur étant affectée. Une couleur unie recouvrant toute la partie de l'image qu'elle représente s'oppose aux textures colorées de l'art antérieur en forme de grillage dont le grillage ne recouvre qu'une partie de la zone de l'image que la texture représente. Le bloc 17 de mélange intervisibilité reçoit comme paramètres d'entrée la coloration intervisibilité coitv du pixel courant et le coefficient d'intervisibilité $\alpha$itv du pixel courant, tous deux en provenance du bloc 14 de gestion des coefficients. Le bloc 17 de mélange intervisibilité réalise la modulation, pixel par pixel, de la coloration intervisibilité coitv du pixel courant par le coefficient intervisibilité $\alpha$itv du pixel courant, ladite modulation consistant en un produit entre la coloration intervisibilité coitv et le coefficient intervisibilité $\alpha$itv. La formule de calcul du coefficient intervisibilité $\alpha$itv permet de réaliser un lissage du contour des zones d'intervisibilité, lequel lissage supprime les effets « marches d'escalier » qui sont particulièrement gênants essentiellement en dynamique. L'ordre des priorités entre les différentes informations participant à la constitution de l'image altimétrique n'est par conséquent plus nécessairement strictement vérifié pour les pixels appartenant aux contours d'une zone de présence d'intervisibilité. La coloration intervisibilité intervient aussi bien dans le type de mode hypsométrique que dans le type de mode anticollision (sauf bien sûr demande contraire du pilote au travers de l'interface homme machine qui peut invalider l'intervisibilité comme la forêt globalement au niveau de toute l'image).

L'additionneur 13 réalise l'addition, pixel par pixel, entre ses trois paramètres d'entrée qui sont respectivement le paramètre de sortie du bloc 15 de mélange hypsométrique ou anticollision, à savoir la coloration hypsométrique ou anticollision modulée, le paramètre de sortie du bloc 16 de mélange forêt, à savoir la couleur forêt modulée, le paramètre de sortie du bloc 17 de mélange intervisibilité, à savoir la coloration intervisibilité modulée. Le résultat de cette addition constitue en chaque pixel l'information altimétrique aussi appelée couleur altimétrique, l'ensemble des informations altimétriques de tous les pixels constituant l'image altimétrique. La couleur altimétrique est codée sur 18 bits, 6 bits par composante de couleur rouge, verte et bleue.

Le bloc 46 d'interpolation de planimétrie reçoit, en provenance du bloc 41 interface d'entrée les paramètres d'entrée qui sont planA, planB, planC et planD, codés chacun sur 16 bits, et représentant, respectivement au niveau des points A, B, C et D, des éléments classiques de planimétrie comme par exemple des routes, des fleuves et de lacs, des réseaux, des zones aéronautiques. Le bloc 46 d'interpolation de planimétrie reçoit aussi, en provenance du bloc 47 de génération des coefficients les paramètres d'entrée C1 et C2. Les paramètres de sortie du bloc 46 d'interpolation de planimétrie sont, pour chaque pixel courant, le coefficient planimétrie $\alpha$plan, codé sur 4 bits, ainsi qu'une information planimétrique au niveau dudit pixel courant aussi appelée couleur planimétrique au niveau dudit pixel courant, l'ensemble des informations planimétriques de tous les pixels constituant l'image planimétrique.

Les paramètres d'entrée planA, planB, planC et planD, contiennent chacun un coefficient planimétrie, res-pectivement $\alpha$pA, $\alpha$pB, $\alpha$pC et $\alpha$pD, lequel est codé sur 4 bits et vaut zéro en cas d'absence d'élément de planimétrie au point considéré. Le coefficient planimétrie $\alpha$plan est donné, au niveau de chaque pixel courant, par la formule

suivante :

$$\alpha plan = \frac{[(16-adfx)\cdot(16-adfy)\cdot\alpha pA + adfx\cdot(16-adfy)\cdot\alpha pB + (16-adfx)\cdot adfy\cdot\alpha pC + adfx\cdot adfy\cdot\alpha pD]}{256}$$

Les paramètres d'entrée planA, planB, planC et planD, contiennent également chacun une donnée de planimétrie, respectivement dpA, dpB, dpC et dpD, qui se présente sous la forme de la juxtaposition de trois données de composante de couleur rouge (RdpA, RdpB, RdpC et RdpD,), verte (VdpA, VdpB, VdpC et VdpD,) et bleue (BdpA, BdpB, BdpC et BdpD,), chaque composante de couleur étant codée sur 4 bits. Le paramètre de sortie, la couleur planimétrique coplani, est codée sur 18 bits car constituée de la juxtaposition de trois données de composante de couleur rouge Rp, verte Vp et bleue Bp, chaque composante de couleur étant codée sur 6 bits, et étant donnée, au niveau de chaque pixel courant, par l'une des formules suivantes :

$$Rp = \frac{[(16-adfx)\cdot(16-adfy)\cdot RdpA + adfx\cdot(16-adfy)\cdot RdpB + (16-adfx)\cdot adfy\cdot RdpC + adfx\cdot adfy\cdot RdpD]}{256}$$

$$Vp = \frac{[(16-adfx)\cdot(16-adfy)\cdot VdpA + adfx\cdot(16-adfy)\cdot VdpB + (16-adfx)\cdot adfy\cdot VdpC + adfx\cdot adfy\cdot VdpD]}{256}$$

$$Bp = \frac{[(16-adfx)\cdot(16-adfy)\cdot BdpA + adfx\cdot(16-adfy)\cdot BdpB + (16-adfx)\cdot adfy\cdot BdpC + adfx\cdot adfy\cdot BdpD]}{256}$$

L'ensemble des paramètres de sortie du bloc 46 d'interpolation de planimétrie est retardé d'environ K2 lignes par l'intermédiaire de deux piles d'attente 33 et 34 afin que lesdits paramètres de sortie soient en phase avec l'information altimétrique disponible à la sortie de l'additionneur 13.

Les paramètres d'entrée du bloc 18 d'application d'ombrage sont, pour chaque pixel courant, l'information altimétrique ou couleur altimétrique coalti en provenance de l'additionneur 13, l'information planimétrique ou couleur planimétrique coplani en provenance de la pile d'attente 34, et le coefficient d'ombrage αomb en provenance de la table 21 d'ombrage. Le bloc 18 d'application d'ombrage comporte deux types de mode de fonctionnement. L'un des types de mode de fonctionnement est le type de mode de fonctionnement normal dans lequel le coefficient d'ombrage αomb module la couleur altimétrique coalti mais pas la couleur planimétrique coplani, la modulation consistant en la réalisation du produit αomb par coalti pixel par pixel, ce produit devenant la couleur altimétrique modulée coalti, la couleur planimétrique étant alors transmise sans modification entre l'entrée et la sortie du bloc 18 d'application d'ombrage. L'autre type de mode de fonctionnement est le type de mode de fonctionnement inversé dans lequel le coefficient d'ombrage αomb module la couleur planimétrique coplani mais pas la couleur altimétrique coalti, la modulation consistant en la réalisation du produit αomb par coplani pixel par pixel, ce produit devenant la couleur planimétrique modulée coplani, la couleur altimétrique étant alors transmise sans modification entre l'entrée et la sortie du bloc 18 d'application d'ombrage. Les paramètres de sortie du bloc 18 d'application d'ombrage sont d'une part coalti, couleur altimétrique modulée dans le type de fonctionnement normal ou couleur altimétrique non modulée dans le type de fonctionnement inversé, et d'autre part coplani, couleur planimétrique non modulée dans le type de fonctionnement normal ou couleur planimétrique modulée dans le type de fonctionnement inversé.

Le bloc 19 de mélange altimétrie/planimétrie reçoit comme paramètres d'entrée les couleurs coalti et coplani en provenance du bloc 18 d'application d'ombrage ainsi que le coefficient planimétrie αplan en provenance du bloc de la pile d'attente 33 mais ayant été ensuite retardé par le bloc 35 de retard afin d'être en phase avec les couleurs coalti et coplani. Le mélange entre couleurs coalti et coplani se fait, pixel par pixel, à l'aide du coefficient planimétrie αplan, le résultat étant l'information cartographique encore appelée couleur cartographique cocarto. La loi de mélange peut être de différents types. Un exemple de loi de mélange est la loi dite normale dont l'expression est la suivante: *cocarto=coplani+(1-αplan)·coalti*. Un autre exemple de loi de mélange est la loi dite en $K^2$ dont l'expression est la suivante: *cocarto=αplan·coplani+(1-αplan)·coalti*. Il est également possible de compléter ces différentes lois par un seuillage du type *cocarto=coplani* si le coefficient planimétrie αplan dépasse un seuil donné. Le bloc 19 de mélange altimétrie/planimétrie peut également intégrer une table de correspondance similaire à la table 21 d'ombrage. Cette table de correspondance permet d'associer à toutes les valeurs du coefficient planimétrie αplan un couple de coefficients βalti et βplani, par exemple codés sur 5 bits chacun, le mélange s'effectuant alors selon la formule suivante: *cocarto=βalti·coalti+βplani·coplani*, formule qui permet de simuler, par l'intermédiaire d'une programmation adaptée de la table de correspondance, bon nombre de lois de mélange y compris des lois non linéaires du type loi à seuil. Dans la combinaison pondérée permettant d'obtenir les informations cartographiques constituant l'image cartographique, l'image altimétrique considérée est allégée, c'est-à-dire qu'en sont retirées au moins l'information de présence d'une zone de forêt, l'information de zone de portée de menace ou de secteur de visibilité de l'aéronef selon les cas, ainsi que les colorations hypsométriques ou anticollision ne représentant ni danger de collision ni risque de danger de collision et parfois même les informations d'intervisibilité, le tout afin de rendre la lecture de la carte plus efficace pour le pilote. On réalise ainsi un bon compromis densité/lisibilité des informations affichées. Dans le cas où la partie planimétrique de la base de données est de type carte papier numérisée, lorsque la densité d'informations planimétrique est trop riche ou que l'ombrage existe de manière trop marquée, dans un souci de lisibilité de la carte le coefficient d'ombrage $\alpha$omb est inhibé, ne modulant alors ni l'image planimétrique ni l'image altimétrique, correspondant alors à un type de mode de fonctionnement dit inversé dégradé.

En aval du bloc 19 de mélange altimétrie/planimétrie la couleur cartographique cocarto peut être modifiée à volonté à l'aide de la palette 25 qui permet la transformation aussi bien des composantes de couleur que de la luminance ou du contraste de l'image cartographique constituée par l'ensemble des couleurs cartographiques cocarto de tous les pixels. La couleur cartographique cocarto traverse ensuite le bloc 36 « latch&fifoPFLH » qui dans le cas d'une image cartographique 2D5 met sur un bus de sortie 37, à destination de la fonction de gestion de la carte accélérateur cartographique pour écriture dans la mémoire cible, l'image cartographique à un format et à une fréquence adaptés au bus de sortie 37. La fonction « latch » du bloc 36 permet d'adapter le débit de sortie des pixels de l'image cartographique 2D5 ou de l'image cartographique profile verticale sur le bus 37 de sortie qui est par exemple un bus de 32 bits. La fonction « fifoPFLH » du bloc 36 d'adapter le débit sur le bus 37 de sortie au type de balayage de la mémoire cible (vertical puis horizontal au lieu de horizontal puis vertical comme pour les images cartographiques 2D5 ou profile verticale). Cela permet de conserver une écriture dans la mémoire cible pour une image profile horizontale qui soit homogène avec celle pour une image cartographique 2D5 ou profile verticale; en effet, l'écriture d'une image cartographique 2D5 ou profile verticale est réalisée ligne par ligne, tandis que l'écriture d'une image cartographique profile horizontale est réalisée double colonne par double colonne. Lorsque une image cartographique et une image profile doivent être affichées sur un même écran, la carte accélérateur cartographique les calcule et les affiche successivement dans le temps, de manière périodique, en reprogrammant toutes les tables entre chaque calcul.

Le bloc 44 profile et le multiplexeur 11 interviennent dans le cas d'une image cartographique profile, que celle-ci soit verticale comme sur la figure 5 ou horizontale comme sur la figure 6, l'image cartographique profile étant alors représentée par le sigle PFL. Cette image cartographique profile représente une coupe du terrain survolé. L'altitude représentée sur l'image cartographique profile correspond préférentiellement au majorant de l'altitude du terrain sur une ligne qui appartient au couloir C et qui est perpendiculaire à la flèche, par exemple la ligne Ip appelée tranche du couloir C, le couloir C étant une bande de terrain représentée par un rectangle sur les figures 5 et 6, le flèche représentant le cap de l'aéronef. Cette image cartographique profile se rajoute à l'image cartographique 2D5, soit sous la forme d'une fenêtre généralement située à gauche de l'image cartographique 2D5 dans le repère de l'écran d'affichage dans le cas d'une image cartographique profile verticale comme sur la figure 5, soit sous la forme d'une fenêtre généralement située en dessous de l'image cartographique 2D5 dans le repère de l'écran d'affichage dans le cas d'une image cartographique profile horizontale comme sur la figure 6. Dans le repère de l'écran d'affichage, le sens de balayage va, sur la figure 5 de gauche à droite pour une ligne puis de bas en haut pour les différentes lignes, sur la figure 6 de bas en haut pour une colonne puis de gauche à droite pour les différentes colonnes. Le sens de balayage est indiqué sur les figures 5 et 6 par deux flèches dans la fenêtre PFL ; le cap de l'aéronef est indiqué sur les figures 5 et 6 par une flèche dans la fenêtre 2D5. La luminance de l'image cartographique profile est constante et par conséquent indépendante du coefficient d'ombrage $\alpha$omb, les deux types de mode hypsométrique et anticollision restant possibles. Aucune information d'intervisibilité, de forêt ou de planimétrie n'est représentée.

Dans le cas d'une image cartographique profile, le bloc 44 profile détecte l'altitude maximale altmax du terrain sur chaque tranche du couloir C considéré, les pixels de l'image cartographique dont l'altitude est supérieure à l'altitude altmax correspondent au ciel et sont représentés par une couleur copflc (commune à tous les pixels) de ciel. Les pixels de l'image cartographique dont l'altitude est inférieure à l'altitude altmax correspondent au terrain et sont représentés, soit par une couleur copfls (commune à tous les pixels) du terrain qui est uniforme et indépendante de l'altitude du terrain représenté, soit par la coloration hypsométrique ou anticollision dans le type de mode hypsométrique ou anticollision, des paramètres de contrôle du multiplexeur 11, non représentés sur le figure 3, permettant au pilote de choisir l'une ou l'autre représentation. Le multiplexeur 11 choisit, par l'intermédiaire desdits paramètres de contrôle, entre les paramètres d'entrée, coHG, copflc et copfls, celui qu'il va transmettre en sortie à destination du bloc 15 de mélange hypsométrique ou anticollision. Le bloc 44 profile indique, pixel par pixel, à l'aide du paramètre pflc, si le pixel courant correspond au ciel ou au terrain selon que ce pixel courant a une altitude supérieure ou inférieure à l'altitude altmax du couloir C considéré. Le fonctionnement, dans le cas d'une image cartographique profile, du soustracteur 12, de la table 22 hypsométrique ou anticollision, et du bloc 15 de mélange hypsométrique ou anticollision, sont similaires à leur fonctionnement dans le cas d'une image cartographique 2D5.

**EP 1 402 474 B1**

**Revendications**

1. Procédé de zoom sur une partie d'une image qui est constituée de pixels et qui représente un terrain survolé par un aéronef, l'image étant modulée, pixel par pixel, par une information d'ombrage (αomb) représentative du relief du terrain, ladite information d'ombrage (αomb) étant déterminée par l'intermédiaire d'un calcul réalisé, dans le repère d'un écran d'affichage de l'aéronef, pixel par pixel, à partir des altitudes de pixels voisins du pixel courant dans le cas de l'image non zoomée, **caractérisé en ce que**, dans le cas de l'image zoomée avec un facteur de zoom dont la valeur appartient à une plage donnée distincte de la plage à laquelle appartient le facteur de zoom unité lequel correspond à une image non zoomée, l'information d'ombrage est déterminée par l'intermédiaire dudit calcul réalisé à partir des altitudes (Z0, Z1, Z2, Z3) de pixels qui sont plus éloignés du pixel courant que les pixels voisins, d'un facteur d'éloignement dont la valeur (K1+K2) appartient à ladite plage donnée.

2. Procédé de zoom selon la revendication 1, **caractérisé en ce que** le calcul détermine l'information d'ombrage (αomb) à partir de quatre pixels formant les sommets d'un carré dont le pixel courant est le centre, l'information d'ombrage (αomb) étant obtenue à partir d'une part de la différence d'altitude (DZ30) entre le pixel situé en haut à gauche du pixel courant et le pixel situé en bas à droite du pixel courant et d'autre part de la différence d'altitude (DZ21) entre le pixel situé en haut à droite du pixel courant et le pixel situé en bas à gauche du pixel courant.

3. Procédé de zoom selon la revendication 2, **caractérisé en ce qu'**une fonction de saturation est appliquée sur le résultat de chaque différence (DZ30, DZ21).

4. Procédé de zoom selon l'une quelconque des revendications 2 à 3, **caractérisé en ce que** l'information d'ombrage est directement obtenue par lecture d'une table de correspondance à deux entrées, l'une des entrées recevant la différence d'altitude (DZ30, DZi) entre le pixel situé en haut à gauche du pixel courant et le pixel situé en bas à droite du pixel courant et l'autre entrée recevant la différence d'altitude (DZ21, DZj) entre le pixel situé en haut à droite du pixel courant et le pixel situé en bas à gauche du pixel courant.

5. Procédé de zoom selon la revendication 4, **caractérisé en ce que** les valeurs de la table sont recalculées d'une part à chaque changement d'échelle de l'image et d'autre part à chaque changement du zoom.

6. Procédé de zoom selon l'une quelconque des revendications 2 à 5, **caractérisé en ce que** le nombre de bits de codage des différences d'altitude (DZ30, DZ21, DZi, DZj) est inférieur au nombre de bits de codage des altitudes (Z0, Z1, Z2, Z3), et **en ce que** la correspondance entre les bits de codage des différences d'altitude (DZ30, DZ21, DZi, DZj) et les bits de codage des altitudes (Z0, Z1, Z2, Z3) est variable de manière à s'adapter à la variation des différences d'altitude (DZ30, DZ21, DZi, DZj) en fonction de la variation de l'éloignement des pixels entrant dans le calcul desdites différences d'altitude (DZ30, DZ21, DZi, DZj).

7. Procédé de zoom selon la revendication 6, **caractérisé en ce que** lorsque la valeur de l'échelle de l'image diminue substantiellement, le poids du bit du codage des altitudes (Z0, Z1, Z2, Z3) correspondant au bit le moins signifiant du codage des différences d'altitude (DZ30, DZ21, DZi, DZj) augmente.

8. Procédé de zoom selon l'une quelconque des revendications 6 à 7, **caractérisé en ce que** lorsque la valeur du zoom augmente substantiellement, le poids du bit du codage des altitudes (Z0, Z1, Z2, Z3) correspondant au bit le moins signifiant du codage des différences d'altitude (DZ30, DZ21, DZi, DZj) diminue.

9. Procédé de zoom selon l'une quelconque des revendications 2 à 8, **caractérisé en ce que** le procédé de zoom utilise la succession bout à bout de quatre piles d'attente (31, 32) de longueurs déterminées de manière à ce que l'altitude (Z0) du pixel situé en bas à droite du pixel courant soit disponible au niveau de l'entrée de la première pile d'attente, l'altitude (Z1) du pixel situé en bas à gauche du pixel courant soit disponible entre la sortie de la première pile d'attente et l'entrée de la deuxième pile d'attente (31), l'altitude (Z4) du pixel courant soit disponible entre la sortie de la deuxième pile d'attente (31) et l'entrée de la troisième pile d'attente (32), l'altitude (Z2) du pixel situé en haut à droite du pixel courant soit disponible entre la sortie de la troisième pile d'attente (32) et l'entrée de la quatrième et dernière pile d'attente, l'altitude (Z3) du pixel situé en haut à gauche du pixel courant soit disponible au niveau de la sortie de la quatrième et dernière pile d'attente.

**Claims**

1. Zoom method for zooming onto a part of an image which consists of pixels and which represents a terrain overflown by an aircraft, the image being modulated, pixel by pixel, by a shading cue ($\alpha$sha) representative of the relief of the terrain, said shading cue ($\alpha$sha) being determined by way of a computation carried out, in the reference frame of a display screen of the aircraft, pixel by pixel, on the basis of the altitudes of pixels neighbouring the current pixel in the case of the unzoomed image, **characterized in that**, in the case of the image zoomed with a zoom factor whose value belongs to a given span distinct from the span to which the unit zoom factor belongs, the latter corresponding to an unzoomed image, the shading cue is determined by way of said computation carried out on the basis of the altitudes ($Z0$, $Z1$, $Z2$, $Z3$) of pixels which are more remote from the current pixel than the neighbouring pixels, by a remoteness factor whose value ($K1+K2$) belongs to said given span.

2. Zoom method according to Claim 1, **characterized in that** the computation determines the shading cue ($\alpha$sha) on the basis of four pixels forming the vertices of a square whose current pixel is the centre, the shading cue ($\alpha$sha) being obtained on the basis on the one hand of the difference in altitude ($DZ30$) between the pixel situated at the top left of the current pixel and the pixel situated at the bottom right of the current pixel and on the other hand of the difference in altitude ($DZ21$) between the pixel situated at the top right of the current pixel and the pixel situated at the bottom left of the current pixel.

3. Zoom method according to Claim 2, **characterized in that** a saturation function is applied to the result of each difference.

4. Zoom method according to either one of Claims 2 and 3, **characterized in that** the shading cue is obtained directly by reading a lookup table with two inputs, one of the inputs receiving the difference in altitude ($DZ30$, $DZi$) between the pixel situated at the top left of the current pixel and the pixel situated at the bottom right of the current pixel and the other input receiving the difference in altitude ($DZ21$, $DZj$) between the pixel situated at the top right of the current pixel and the pixel situated at the bottom left of the current pixel.

5. Zoom method according to Claim 4, **characterized in that** the values of the table are recomputed on the one hand with each change of scale of the image and on the other hand with each change of the zoom.

6. Zoom method according to any one of Claims 2 to 5, **characterized in that** the number of bits for coding the altitude differences ($DZ30$, $DZ21$, $DZi$, $DZj$) is less than the number of bits for coding the altitudes ($Z0$, $Z1$, $Z2$, $Z3$), and **in that** the correspondence between the bits for coding the altitude differences ($DZ30$, $DZ21$, $DZi$, $DZj$) and the bits for coding the altitudes ($Z0$, $Z1$, $Z2$, $Z3$) is variable so as to accommodate the variation in the altitude differences ($DZ30$, $DZ21$, $DZi$, $DZj$) as a function of the variation in the remoteness of the pixels entering into the computation of said altitude differences ($DZ30$, $DZ21$, $DZi$, $DZj$).

7. Zoom method according to Claim 6, **characterized in that** when the value of the scale of the image decreases substantially, the weight of the bit for coding the altitudes ($Z0$, $Z1$, $Z2$, $Z3$) corresponding to the least significant bit of the coding of the altitude differences ($DZ30$, $DZ21$, $DZi$, $DZj$) increases.

8. Zoom method according to either one of Claims 6 and 7, **characterized in that** when the value of the zoom increases substantially, the weight of the bit for coding the altitudes ($Z0$, $Z1$, $Z2$, $Z3$) corresponding to the least significant bit of the coding of the altitude differences ($DZ30$, $DZ21$, $DZi$, $DZj$) decreases.

9. Zoom method according to any one of Claims 2 to 8, **characterized in that** the zoom method uses the abutting succession of four queue stacks (31, 32) of specified lengths in such a way that the altitude ($Z0$) of the pixel situated at the bottom right of the current pixel is available at the level of the input of the first queue stack, the altitude ($Z1$) of the pixel situated at the bottom left of the current pixel is available between the output of the first queue stack and the input of the second queue stack (31), the altitude ($Z4$) of the current pixel is available between the output of the second queue stack (31) and the input of the third queue stack (32), the altitude ($Z2$) of the pixel situated at the top right of the current pixel is available between the output of the third queue stack (32) and the input of the fourth and last queue stack, the altitude ($Z3$) of the pixel situated at the top left of the current pixel is available at the level of the output of the fourth and last queue stack.

**Patentansprüche**

1. Verfahren zum Zoomen auf einen Teil eines Bilds, das aus Pixeln besteht und ein von einem Luftfahrzeug überflogenes Gelände darstellt, wobei das Bild Pixel für Pixel von einer für die Geländeform repräsentativen Schattierungsinformation ($\alpha$omb) moduliert wird, wobei die Schattierungsinformation ($\alpha$omb) mittels einer Berechnung bestimmt wird, die in der Kennungsmarkierung eines Anzeigebildschirms des Luftfahrzeugs Pixel für Pixel ausgehend von den Höhen von Pixeln durchgeführt wird, die dem laufenden Pixel im Fall des nicht gezoomten Bilds benachbart sind, **dadurch gekennzeichnet, dass** im Fall des mit einem Zoomfaktor, dessen Wert zu einem gegebenen Bereich gehört, der sich von dem Bereich unterscheidet, zu dem der einem nicht gezoomten Bild entsprechende Zoomfaktor Eins gehört, gezoomten Bilds die Schattierungsinformation mittels der Berechnung bestimmt wird, die ausgehend von den Höhen (Z0, Z1, Z2, Z3) von Pixeln durchgeführt wird, die um einen Entfernungsfaktor, dessen Wert (K1+K2) zum gegebenen Bereich gehört, weiter vom laufenden Pixel entfernt sind als die benachbarten Pixel.

2. Zoomverfahren nach Anspruch 1, **dadurch gekennzeichnet, dass** die Berechnung die Schattierungsinformation ($\alpha$omb) ausgehend von vier Pixeln bestimmt, die die Spitzen eines Vierecks bilden, von dem das laufende Pixel die Mitte ist, wobei die Schattierungsinformation ($\alpha$omb) einerseits ausgehend vom Höhenunterschied (DZ30) zwischen dem oben links vom laufenden Pixel befindlichen Pixel und dem unten rechts vom laufenden Pixel befindlichen Pixel und andererseits ausgehend vom Höhenunterschied (DZ21) zwischen dem oben rechts vom laufenden Pixel befindlichen Pixel und dem unten links vom laufenden Pixel befindlichen Pixel erhalten wird.

3. Zoomverfahren nach Anspruch 2, **dadurch gekennzeichnet, dass** eine Sättigungsfunktion an das Ergebnis jedes Unterschieds (DZ30, DZ21) angelegt wird.

4. Zoomverfahren nach einem der Ansprüche 2 bis 3, **dadurch gekennzeichnet, dass** die Schattierungsinformation direkt durch Ablesen einer Entsprechungstabelle mit zwei Eingängen erhalten wird, wobei der eine Eingang den Höhenunterschied (DZ30, DZi) zwischen dem oben links vom laufenden Pixel befindlichen Pixel und dem unten rechts vom laufenden Pixel befindlichen Pixel und der andere Eingang den Höhenunterschied (DZ21, DZj) zwischen dem oben rechts vom laufenden Pixel befindlichen Pixel und dem unten links vom laufenden Pixel befindlichen Pixel empfängt.

5. Zoomverfahren nach Anspruch 4, **dadurch gekennzeichnet, dass** die Werte der Tabelle einerseits bei jeder Maßstabsänderung des Bilds und andererseits bei jeder Änderung des Zooms neu berechnet werden.

6. Zoomverfahren nach einem der Ansprüche 2 bis 5, **dadurch gekennzeichnet, dass** die Anzahl von Codierbits der Höhenunterschiede (DZ30, DZ21, DZi, DZj) geringer ist als die Anzahl von Codierbits der Höhen (Z0, Z1, Z2, Z3), und dass die Entsprechung zwischen den Codierbits der Höhenunterschiede (DZ30, DZ21, DZi, DZj) und den Codierbits der Höhen (Z0, Z1, Z2, Z3) variabel ist, um sich an die Veränderung der Höhenunterschiede (DZ30, DZ21, DZi, D2j) in Abhängigkeit von der Veränderung der Entfernung der Pixel anzupassen, die zur Berechnung der Höhenunterschiede (DZ30, DZ21, DZi, DZj) gehören.

7. Zoomverfahren nach Anspruch 6, **dadurch gekennzeichnet, dass**, wenn der Wert des Maßstabs des Bilds stark abnimmt, das Gewicht des Codierbits der Höhen (Z0, Z1, Z2, Z3), das dem am wenigsten signifikanten Bit der Codierung der Höhenunterschiede (DZ30, DZ21, DZi, DZj) entspricht, ansteigt.

8. Zoomverfahren nach einem der Ansprüche 6 bis 7, **dadurch gekennzeichnet, dass**, wenn der Wert des Zooms stark ansteigt, das Gewicht des Codierbits der Höhen (Z0, Z1, Z2, Z3), das dem am wenigsten signifikanten Bit der Codierung der Höhenunterschiede (DZ30, DZ21, DZi, DZj) entspricht, abnimmt.

9. Zoomverfahren nach einem der Ansprüche 2 bis 8, **dadurch gekennzeichnet, dass** das Zoomverfahren die aneinander anstoßende Folge von vier Wartestapeln (31, 32) verwendet, deren Längen so bestimmt sind, dass die Höhe (Z0) des unten rechts vom laufenden Pixel befindlichen Pixels am Eingang des ersten Wartestapels verfügbar ist, die Höhe (Z1) des unten links vom laufenden Pixel befindlichen Pixels zwischen dem Ausgang des ersten Wartestapels und dem Eingang des zweiten Wartestapels (31) verfügbar ist, die Höhe (Z4) des laufenden Pixels zwischen dem Ausgang des zweiten Wartestapels (31) und dem Eingang des dritten Wartestapels (32) verfügbar ist, die Höhe (Z2) des oben rechts vom laufenden Pixel befindlichen Pixels zwischen dem Ausgang des dritten Wartestapels (32) und dem Eingang des vierten und letzten Wartestapels verfügbar ist, und die Höhe (Z3) des links oben vom laufenden Pixel befindlichen Pixels am Ausgang des vierten und letzten Wartestapels verfügbar ist.

FIG.1

FIG.2

FIG.3

EP 1 402 474 B1

FIG.4

FIG.5

FIG.6